# EUROPÄISCHE PATENTSCHRIFT

(11) **EP 1 654 330 B1**
(45) Veröffentlichungstag und Bekanntmachung des Hinweises auf die Patenterteilung: **17.10.2007**
(21) Anmeldenummer: 04763188.2
(22) Anmeldetag: 13.07.2004
(51) Int. Cl.: C09C 3/10, C08K 3/00, C08K 5/10, C09D 7/12, C09D 169/00, C09D 133/00

(54) **VERWENDUNG VON WASSERVERDÜ NNBAREN KONDENSATIONSHARZEN ALS DISPERGIERMITTEL FÜR WASSERVERDÜNNBARE PIGMENTKONZENTRATE**
UTILIZATION OF WATER-DILUTABLE CONDENSATION RESIN AS WATER-DILUTABLE DISPERSING AGENT FOR PIGMENT CONCENTRATES
UTILISATION DE RESINES DE CONDENSATION POUVANT ETRE DILUEES A L'EAU EN TANT QU'AGENT DISPERSANT DESTINE A DES CONCENTRES DE PIGMENTS POUVANT ETRE DILUES A L'EAU

(30) Priorität: 23.07.2003 AT 11592003
(43) Veröffentlichungstag der Anmeldung: 10.05.2006
(73) Patentinhaber: Cytec Surface Specialties Austria GmbH, 8402 Werndorf (AT)
(72) Erfinder: HOBISCH, Gerald, A-8042 Graz (AT); MORRE, Peter, A-8020 Graz (AT)
(74) Vertreter: Deckers, Hellmuth Alexander
(86) Internationale Anmeldenummer: PCT/EP2004/007719
(87) Internationale Veröffentlichungsnummer: WO 2005/012439

(56) Entgegenhaltungen:
- EP-A- 0 962 507
- WO-A-01/40336
- US-A1- 2002 016 407
- US-A1- 2002 077 389

## Beschreibung

Die Erfindung betrifft die Verwendung von wasserverdünnbaren Kondensationsharzen als Dispergiermittel für Pigmentkonzentrate.

Dispergiermittel für wasserverdünnbare Pigmentkonzentrate sind häufig abgeleitet von Ammoniumsalzen, Sulfoniumsalzen, Epoxid-Amin-Addukten oder enthalten Polyäthylenglykol-Segmente. Diese bekannten Dispergiermittel haben den Nachteil, daß sie aufgrund ihrer ionischen oder ionogenen Struktur bzw. durch die Polyäthylenglykol-Strukturen sehr hydrophil sind und so die Wasserfestigkeit und den Korrosionsschutz der Beschichtungen negativ beeinflussen. Insbesondere in Mischung mit lufttrocknenden Alkydharz-Systemen zeigt sich eine Unverträglichkeit, die nur zu matten, nicht glänzenden Beschichtungen führt.

Das Dokument US 2002/0077389 betrifft Mischungen von Kondensationsprodukten **AB** und wassermischbaren Hydroxyurethanen. Es ist zutreffend, daß diese Kondensationsprodukte **AB** auch die in der vorliegenden Anmeldung beanspruchten Kondensationsharze umfassen, da in D2 sämtliche Kondensationsprodukte genannt sind von Säuregruppen enthaltenden, wasserverdünnbaren Harzen **A** und Hydroxylgruppen enthaltenden Harzen **B**, die alleine nicht wasserlöslich sind, wobei **A** und **B** jeweils für sich ausgewählt sein können aus Polyestern, Alkydharzen, Polyurethanharzen, Polyacrylatharzen und Epoxidharzen. In US2002/0077389 wird die Verwendung solcher Kondensationsharze als Dispergiermittel für Pigmente nicht erwähnt.

Aufgabe der Erfindung ist es daher, ein Dispergiermittel bereitzustellen, das sich mit wasserverdünnbaren Bindemitteln formulieren läßt und Beschichtungen mit ausgezeichnetem Korrosionsschutz ergibt.

Es wurde gefunden, daß nach Neutralisation wasserverdünnbare, Säuregruppen enthaltende Polymere, die durch Kondensation von Säuregruppen enthaltenden Komponenten A und Hydroxylgruppen enthaltenden hydrophoben Polyestern **B** erhältlich sind, sich besonders gut zur Dispergierung von Pigmentmischungen eignen, die in Beschichtungen mit ausgezeichnetem Korrosionsschutz eingesetzt werden.

Die Erfindung betrifft daher die Verwendung von wasserverdünnbaren Kondensationsharzen **AB** als Dispergiermittel für Pigmente, wobei die Kondensationsharze eine Säurezahl von 20 mg/g bis 180 mg/g aufweisen und durch Kondensation von Säuregruppen enthaltenden Komponenten **A** mit einer Säurezahl von 30 mg/g bis 240 mg/g, ausgewählt aus Copolymerisaten von olefinisch ungesättigten Monomeren und durch. Dimerisation oder Oligomerisation aus ungesättigten aliphatischen Carbonsäuren gewonnenen Verbindungen auf der einen Seite und Hydroxylgruppen enthaltenden Polyestern **B** mit einer Hydroxylzahl von 20 mg/g bis 300 mg/g und einer zahlenmittleren molaren Masse Mₙ von 500 g/mol bis 5000 g/mol erhältlich sind, und der Massenanteil der Komponente **A** in der Reaktionsmischung zur Synthese der Kondensationsharze

AB 30 % bis 90 % und der der Komponente **B** 70 % bis 10 % beträgt, mit der Maßgabe, daß die Summe der Massenanteile der beiden Komponenten stets 100 % ergibt.

Die Säurezahl ist gemäß DIN 53 402 definiert als der Quotient derjenigen Masse *m*_{KOH} an Kaliumhydroxid, die erforderlich ist, um eine zu untersuchende Probe zu neutralisieren, und der Masse *m*_{B} dieser Probe (Masse des Feststoffes in der Probe bei Lösungen oder Dispersionen); ihre übliche Einheit ist "mg/g".

Die Hydroxylzahl ist gemäß DIN 53 240 definiert als der Quotient derjenigen Masse *m*_{KOH} an Kaliumhydroxid, die genausoviel Hydroxylgruppen aufweist wie eine zu untersuchende Probe, und der Masse *m*_{B} dieser Probe (Masse des Feststoffes in der Probe bei Lösungen oder Dispersionen); ihre übliche Einheit ist "mg/g".

Geeignete Komponenten **A** sind Säuregruppen enthaltende Copolymerisate von olefinisch ungesättigten Monomeren mit einer Säurezahl des Copolymerisats von 30 mg/g bis 240 mg/g. Derartige Säuregruppen enthaltende Polymere des Acrylat-Copolymerisat-Typs werden beispielsweise in der EP-A 0 496 079 und in der EP-A 0 295 403 beschrieben.

Bevorzugt werden solche Copolymerisate hergestellt, indem mindestens eines der eingesetzten olefinisch ungesättigten Monomeren, nämlich A1, mindestens eine Säuregruppe, bevorzugt eine Carboxylgruppe, trägt Eines oder mehrere dieser Monomeren A1 werden mit einem oder mehreren Monomeren **A2**, die frei von Säuregruppen sind, gemeinsam polymerisiert. Es ist auch möglich, während der Polymerisation die Zusammensetzung der Monomerenmischung zu verändern. Durch geeignete Wahl der Art und Menge der Monomeren läßt sich die gewünschte Säurezahl leicht einstellen.

Bevorzugt setzt man als Säuregruppen enthaltende Monomere A1 α,β-ungesättigte Carbonsäuren mit 3 bis 13 Kohlenstoffatomen oder Monoalkylester von α,β-ungesättigten aliphatischen Dicarbonsäuren mit 1 bis 20 Kohlenstoffatomen im Alkylrest ein. Es ist auch möglich, olefinisch ungesättigte Dicarbonsäuren wie Maleinsäure, Itaconsäure, Mesaconsäure, Citraconsäure und Dihydromuconsäure in unveresterter Form einzusetzen. Geeignete α,β-ungesättigte Carbonsäuren sind Acryl- und Methacrylsäure, Croton- und Isocrotonsäure, 3-Propylacrylsäure und 2-Octensäure. Geeignete Monoalkylester von α,β-ungesättigten Dicarbonsäuren sind Monomethyl-, Monoäthyl-, Monopropyl- und Monobutylester wie Monomethylmaleinat,

Monäthylfumarat, Mesaconsäuremonobutylester und trans-3-Hexendisäuremonopropylester. Bevorzugt werden diese Säuregruppen-haltigen Monomeren in Massenanteilen von 10 % bis 33 %, bezogen auf die Masse der Monomerenmischung, eingesetzt.

Die Monomeren **A2**, die frei von Säuregruppen sind, sind ausgewählt aus den Alkylestern einbasiger α,β-ungesättigter aliphatischer Carbonsäuren mit 3 bis 7 Kohlenstoffatomen in der Säurekomponente und 1 bis 20, bevorzugt 1 bis 12 Kohlenstoffatomen in der Alkylkomponente; den Dialkylestern von α,β-ungesättigten aliphatischen Dicarbonsäuren mit 4 bis 8 Kohlenstoffatomen in der Säurekomponente und 1 bis 20, bevorzugt 1 bis 12 Kohlenstoffatomen in der Alkylkomponente; den Nitrilen der genannten Säuren; den Hydroxyalkylestern der genannten einbasigen α,β-ungesättigten aliphatischen Carbonsäuren mit 3 bis 7 Kohlenstoffatomen in der Säurekomponente und 2 bis 20 Kohlenstoffatomen in der Hydroxyalkylkomponente, wobei auch Oligo-oxyalkylenglykol-monoester mit einem zahlenmittleren Polymerisationsgrad von 2 bis 50 eingeschlossen sind, deren Alkylengruppen aus den Äthylen- und 1,2-Propylengruppen sowie deren Mischungen ausgewählt sind; den Vinylaromaten wie Styrol und Vinyltoluol sowie den Vinylestern gesättigter aliphatischer linearer und verzweigter Monocarbonsäuren mit 2 bis 20 Kohlenstoffatomen wie Vinylacetat, Vinylpropionat und Vinylversatat. Die Monomeren **A2** werden in Massenanteilen von 67 % bis 90 %, bezogen auf die Masse der Monomerenmischung aus **A1** und **A2** eingesetzt.

Gegebenenfalls können auch als weitere Monomere **A3** einfach oder mehrfach ungesättigte Fettsäuren mit 14 bis 30 Kohlenstoffatomen oder deren Ester mit aliphatischen Alkoholen mit 1 bis 20 Kohlenstoffatomen in der Alkylgruppe eingesetzt werden. Beispiele für geeignete Monomeren **A3** sind Ölsäure, Linolsäure, Linolensäure, Ricinensäure sowie Mischungen solcher Säuren wie Saflorölfettsäure, Sojaölfettsäure, Leinsamenölfettsäure, Baumwollsamenölfettsäure, Sonnenblumenölfettsäure und Tallölfettsäure sowie deren Ester. Der Massenanteil dieser Monomeren **A3** in der Monomermischung aus **A1, A2** und **A3** beträgt dann 0 % bis 50 %.

Die Polymerisation der Monomerenmischung erfolgt nach den bekannten Methoden, vorzugsweise durch radikalisch ausgelöste Polymerisation. Als Initiatoren können die bekannten Peroxide, Persäuren und deren Derivate, Azoverbindungen sowie auch die als Redox-Katalysatoren bekannten Paare von Oxidations- und Reduktionsmitteln, auch gemeinsam mit Salzen von Übergangsmetallen wie Eisen, Cer oder Mangan eingesetzt werden. Die Polymerisation kann in Lösung, Emulsion oder auch in Masse erfolgen.

Die ebenfalls als Komponente **A** geeigneten dimerisierten und oligomerisierten ungesättigten aliphatischen Carbonsäuren werden durch Di- oder Oligomerisation von ein- oder mehrfach ungesättigten Fettsäuren mit 6 bis 30 Kohlenstoffatomen gewonnen. Bevorzugt sind die durch Katalyse mit Metalloxiden gewonnenen Gemische von linearen verzweigten und cyclischen Di- und Trimerisaten.von ungesättigten Fettsäuren mit 16 bis 24, besonders auch mit 18 Kohlenstoffatomen.

Als Komponente **B** eignen sich Hydroxylgruppen enthaltende Polyester mit einer Hydroxylzahl von 20 mg/g bis 300 mg/g und einer zahlenmittleren molaren Masse von 500 g/mol bis 5000 g/mol, bevorzugt 1000 g/mol bis 3000 g/mol. Derartige Polyester **B** sind erhältlich durch Kondensation aus
- **B1**: zweiwertigen aliphatischen linearen, verzweigten oder cyclischen Alkoholen mit 2 bis 20 Kohlenstoffatomen, und/oder 1,2-Epoxiden mit 4 bis 20 Kohlenstoffatomen, und
- **B2**: ein- oder zweibasigen aliphatischen oder aromatischen Carbonsäuren mit 4 bis 40 Kohlenstoffatomen.

Anstelle oder im Gemisch mit den genannten Komponenten **B1** und **B2** können auch ihre reaktiven Derivate (Ester, Anhydride etc.) eingesetzt werden.

Dabei kann ein Stoffmengenanteil von bis zu 10 % der Komponente **B1** ersetzt sein durch drei- oder höherwertige aliphatische lineare, verzweigte oder cyclische Alkohole mit drei bis 20 Kohlenstoffatomen. Ebenso kann ein Stoffmengenanteil von bis zu 10 % der Komponente **B2** ersetzt sein durch eine drei-oder mehrbasige aliphatische oder aromatische Carbonsäure. Die Polyester können auch unter Mitverwendung von Massenanteilen von bis zu 15 % von Hydroxycarbonsäuren **B3** kondensiert werden, die jeweils mindestens eine Hydroxylgruppe und mindestens eine Carboxylgruppe aufweisen.

Als Alkohole **B1** können beispielsweise bevorzugt Äthylenglykol, 1,2- und 1,3-Propylenglykol, 1,4-Butandiol, Neopentylglykol, 1,6-Hexandiol, 1,2- und 1,4-Dihydroxycyclohexan, 3,4-Diäthyl-3,4-hexandiol und 1,4-Bis(hydroxymethyl)cyclohexan jeweils einzeln oder im Gemisch eingesetzt werden. Besonders bevorzugt werden Glykol, Neopentylglykol und 1,2-Propylenglykol.

Als zweibasige Carbonsäuren **B2** werden bevorzugt Adipinsäure, Bernsteinsäure, Sebacinsäure, Cyclohexandicarbonsäure, Phthalsäure, Isophthalsäure und Terephthalsäure, Sulfonyldibenzoesäure, Diphenylätherdicarbonsäure und die isomeren Naphthalindicarbonsäuren eingesetzt, sowie dimere Fettsäuren, die durch katalysierte Dimerisierung ungesättigter Fettsäuren (z.B. Tallöl-Fettsäure) als Gemisch aus acyclischen und cyclischen Dicarbonsäuren gewonnen werden. Auch ein- oder mehrfach ungesättigte aliphatische Dicarbonsäuren wie Maleinsäure, Fumarsäure, Itaconsäure, Citraconsäure und Mesaconsäure oder Sorbinsäure können eingesetzt werden. Besonders bevorzugt werden Adipinsäure, Maleinsäure und die isomeren Phthalsäuren, jeweils einzeln oder im Gemisch. Geeignete einbasige Säuren sind Benzoesäure oder Fettsäuren wie Stearinsäure.

Geeignete Hydroxycarbonsäuren **B3** sind Milchsäure, Dimethylolpropionsäure, Weinsäure, Traubensäure, Glykolsäure, Dihydroxybernsteinsäure und Äpfelsäure. Auch diese Komponente kann Mischungen mehrerer der geeigneten Stoffe enthalten.

Die Polyester werden in bekannter Weise durch Polykondensation der Edukte **B1** bis **B3** oder ihrer esterbildenden Derivate (wie Methylester oder Halogenide oder Anhydride der Säuren oder Acetate der Alkohole) in Masse oder in Lösung erhalten. Zur Beschleunigung der Reaktion können die bekannten Umesterungs-Katalysatoren eingesetzt werden.

Die erfindungsgemäßen Harze **AB** sind erhältlich durch Umsetzung der Komponenten **A** und **B** bei erhöhter Temperatur, vorzugsweise bei 100 °C bis 220 °C, vorzugsweise in der Schmelze ohne Zusatz eines Lösungsmittels, wobei jedoch gegebenenfalls ein unter den Reaktionsbedingungen inertes Lösungsmittel in Massenanteilen von bis zu 20 %, bezogen auf die Summe der Massen der Komponenten **A** und **B** sowie des Lösungsmittels, zugegeben werden kann. Die Umsetzung wird solange vorgenommen, bis die Säurezahl des Kondensationsprodukts aus **A** und **B** einen Wert von 20 mg/g bis 180 mg/g erreicht hat. Bei der Kondensationsreaktion werden geringe Mengen an Wasser gebildet, die bei der Reaktionstemperatur entweichen. Man kann das Wasser bevorzugt auch durch azeotrope Destillation entfernen, indem ein Lösungsmittel eingesetzt wird, das nicht mit Wasser mischbar ist und mit Wasser ein Azeotrop bildet.

Die so hergestellten Harze **AB** werden, gegebenenfalls nach Zugabe von geringen Mengen eines wasserverdünnbaren Lösungsmittels, mit wäßrigen Alkalien, bevorzugt Ammoniaklösungen oder Aminen, neutralisiert. Die Menge an Alkalien wird dabei so gewählt, daß mindestens die Hälfte der Säuregruppen des Harzes neutralisiert ist. Bevorzugt wird jedoch vollständig neutralisiert. Anschließend wird auf einen Festkörper-Massenanteil von bevorzugt 20 % bis 60 %, besonders bevorzugt von 30 % bis 50 %, durch Zugabe von Wasser weiter verdünnt. Es ist auch möglich, die Konzentration des Neutralisationsmittels so einzustellen, daß Verdünnung und Neutralisation gleichzeitig vorgenommen werden. Man erhält so eine wäßrige Lösung oder Dispersion des neutralisierten Harzes.

Die erfindungsgemäß hergestellten Harze **AB** sind nach Neutralisation wasserverdünnbar. Sie sind ausgezeichnet geeignet als Dispergiermittel zur Herstellung von lösungsmittelarmen und lösungsmittelfreien Pigmentpasten. Sie weisen ein hohes Pigmentbindevermögen auf, sind lagerstabil und verändern in den daraus hergestellten Pigmentpasten ihre Viskosität während der Lagerung nicht oder nicht wesentlich. Diese Pigmentpasten lassen sich leicht in wäßrige Bindemittel einarbeiten. Gegenüber direkt pigmentierten Lacken zeigt sich keine negative Beeinflussung der Lackeigenschaften.

Je nach Art des eingesetzten Pigments lassen sich mit den erfindungsgemäß verwendeten Harzen Pigment-Konzentrate herstellen, die im Fall von anorganischen Pigmenten in 100 g des Pigment-Konzentrats 40 g bis 70 g Pigment, 5 g bis 20 g des Kondensationsharzes, gegebenenfalls bis zu 10 g eines Netzmittels und bis zu 10 g eines Lösungsmittels enthalten; im Fall von organischen Pigmenten enthalten 100 g des Pigment-Konzentrats 20 g bis 40 g des Pigments, 5 g bis 40 g des Kondensationsharzes sowie gegebenenfalls bis zu 10 g eines Netzmittels und bis zu 10 g eines Lösungsmittels; bei Ruß-haltigen Pigment-Konzentraten ist die Zusammensetzung auf 100 g des Konzentrats vorteilhafterweise 15 g bis 30 g Ruß, 10 g bis 30 g des Kondensationsharzes, gegebenenfalls bis zu 10 g eines Netzmittels und bis zu 10 g eines Lösungsmittels. Dabei wird jeweils durch Zugabe von Wasser auf die Gesamtmasse von 100 g ergänzt.

Die folgenden Beispiele erläutern die Erfindung, ohne sie in ihrem Umfang zu beschränken.

In den nachfolgenden Beispielen bedeuten ebenso wie im vorhergehenden Text alle Angaben mit der Einheit "%" Massenanteile, soweit nicht anders angegeben. "Teile" sind stets Massenteile. Konzentrationsangaben in "%" sind Massenanteile des gelösten Stoffes in der Lösung.

### Beispiele

### 1 Herstellung der Copolymerisate AI bis AIV und der Polyester BV und BVI

### 1.1 Herstellung des Copolymerisats AI

30 Teile Leinölfettsäure und 5 Teile Xylol wurden auf 135 °C bis 140 °C erwärmt. Bei dieser Temperatur wurde innerhalb 6 bis 8 Stunden gleichzeitig eine Mischung aus 32 Teilen Isobutylmethacrylat, 6 Teilen tert.-Butylperbenzoat, 1 Teil Dibenzoylperoxid (50 %ig auf Dicyclohexylphthalat als Träger) und 5 Teilen Xylol gleichmäßig zugegeben. Nach Beendigung der Zugabe wurde die Reaktionstemperatur beibehalten, bis eine Rückstandsbestimmung einen mindestens 95 %igen Polymerisationsumsatz ergab. Das Copolymerisat wies eine Säurezahl von 209 mg/gund einen Staudinger-Index (in Dimethylformamid als Lösungsmittel) von 5,5 cm³/g auf.

### 1.2 Herstellung der Copolymerisate AII bis AIV

Die Copolymerisate AII bis AIV wurden in bekannter Weise durch Lösungspolymerisation in Isopropanol entsprechend einem berechneten Festkörper-Massenanteil von 50 % hergestellt. Die Mengenverhältnisse der eingesetzten Monomeren und die Kennzahlen der erhaltenen Copolymerisate sind in der Tabelle 1 zusammengefaßt.

**Tabelle 1 Zusammensetzung der Copolymerisate**

| | | Copolymerisat A | | | |
|---|---|---|---|---|---|
| | | AI | AII | AIII | AIV |
| (A2) | Äthylacrylat | - | - | - | 25 |
| | Butylacrylat | - | - | - | 30 |
| | 2-Äthylhexylacrylat | - | 25 | 30 | - |
| | Methylmethacrylat | - | - | - | 30 |
| | Isobutylmethacrylat | 32 | 18 | 27 | - |
| | Styrol | - | 26 | 18,5 | - |
| | Vinyltoluol | 6 | - | - | - |
| (A1) | Acrylsäure | - | 31 | - | 15 |
| | Methacrylsäure | 21 | - | 24,5 | - |
| (A3) | Leinölfettsäure | 41 | - | - | - |
| | Säurezahl in mg/g | 209 | 241 | 160 | 117 |

Die bei den eingesetzten Stoffen angegebenen Zahlen sind Massenanteile in %, die sich jeweils auf 100 % ergänzen.

### 1.3 Herstellung der Polyester BV und BVI (Komponente B)

Durch Azeotropkondensation unter Zusatz von ca. 50 g Toluol als Schleppmittel wurden die Polyester BV und BVI hergestellt. Die Kondensation wurde solange durchgeführt, bis die Säurezahl unter 5 mg/g gesunken war. Die Zusammensetzung der Polyester (zur Polykondensation eingesetzte Massen in g) ergibt sich aus der Tabelle 2.

**Tabelle 2 Zusammensetzung der Polyester**

| | Polyester BV | Polyester BVI |
|---|---|---|
| Trimethylolpropan | 118,0 | 118,0 |
| Neopentylglykol | 13,6 | 13,6 |
| Phthalsäureanhydrid | - | 391,0 |
| Adipinsäure | 100,0 | - |
| Leinölfettsäure | 196,0 | - |
| Cardura E 10 | - | 600,0 |
| | | |
| Hydroxylzahl in mg/g | 93,0 | 112,0 |

### 2 Herstellung der Kondensationsharze (Dispergiermittel D1 bis D7)

### Beispiele 2.1 bis 2.7

Die Copolymerisate A und die Polyester B wurden in den Mengenverhältnissen gemäß der Tabelle 3 in ein geeignetes Reaktionsgefäß gefüllt. Der Ansatz wurde unter Rühren allmählich auf eine Kreislauftemperatur von 200 °C gebracht und so lange bei dieser Temperatur gehalten, bis die angegebene Säurezahl erreicht war. Nach dem Entfernen des Lösemittels wurde der Ansatz mit Äthylenglykolmonobutyläther auf einen Festkörper-Massenanteil von 87 % eingestellt und bei 50 °C unter Zugabe von N,N-Dimethyläthanolamin in Wasser emulgiert. Die Amin- und Wassermenge wurde so gewählt, daß ein pH-Wert der Emulsion von 8,2 bis 8,8 und ein Festkörper-Massenanteil von 35 % resultierte. Die Lösungen der so hergestellten Dispergiermittel waren milchige bis transparente Flüssigkeiten.

**Tabelle 3 Herstellung der Kondensationsharze AB**

| (alle Mengenangaben sind Massenanteile der Komponenten im Feststoff, die Summe ist 100 %) | | | | | | | |
|---|---|---|---|---|---|---|---|
| Beispiel | 2.1 | 2.2 | 2.3 | 2.4 | 2.5 | 2.6 | 2.7 |
| Dispergiermittel | D1 | D2 | D3 | D4 | D5 | D6 | D7 |
| Copolymerisat A | AI 60 | AII 50 | AIII 90 | AIV 80 | AI 70 | AII 65 | AIV 75 |
| Polyester B | BV 40 | BVI 50 | BV 10 | BVI 20 | BVI 30 | BV 35 | BV 25 |
| Säurezahl in mg/g | 91 | 68 | 135 | 73 | 115 | 126 | 68 |

### 3 Lacktechnische Prüfung der Kondensationsprodukte als Dispergiermittel für Pigmente

Gemäß den Angaben in Tabelle 4 wurden die angegebenen Mengen der jeweiligen Pigmente in der folgenden Dispergiermittelzubereitung auf einer Perlmühle dispergiert und anschließend einer Prüfung ihrer Lagerfähigkeit unterworfen.

| | |
|---|---|
| 250,0 | Teile Dispergiermittel aus den angegebenen Beispielen, 35 %ig in Wasser |
| 22,0 | Teile Additol® VXW 6374 (Netzmittel) |
| 4,0 | Teile Additol® VXW 4973 (Entschäumer) |
| 77,0 | Teile Wasser |
| ---- | |
| 353,0 | Teile Pigmentpasten-Zubereitung |

**Tabelle 4 Pigmentpasten**

| Pigment | | Dispergiermittel | Pigment (Teile) | Viskosität nach 1 Tag in mPa·s | Viskosität nach 1 Monat in mPa·s | Lagertest |
|---|---|---|---|---|---|---|
| P1 | ® Hostapermgelb H4G | D1 | 88,0 | 580 | 460 | i.O. |
| P2 | ® Novopermorange HL70 | D2 | 80,0 | 504 | 920 | i.O. |
| P3 | ® Hostaperm rosa E | D3 | 40,0 | 500 | 560 | i.O. |
| P4 | ® Hostaperm grün 8 G | D4 | 80,0 | 595 | 616 | i.O. |
| P5 | ® KRONOS 2310 | D1 | 260,0 | 1030 | 1320 | i.O. |
| P6 | ® Bayferrox 130BM | D6 | 260,0 | 1100 | 1580 | l.Bs. |
| P7 | ® Printex U | D7 | 30,0 | 207 | 230 | i.O. |
| P8 | ® Paliotol gelb L2140 HD | D5 | 80,0 | 580 | 710 | i.O. |
| P9 | ® PaliotoI rot L3910 HD | D2 | 80,0 | 530 | 503 | i.O. |
| P10 | ® Heliogengrün L8730 | D4 | 50,0 | 280 | 296 | i.O. |

| | | | | | | |
|---|---|---|---|---|---|---|
| Pigment der Fa. Clariant Deutschland GmbH (1-4) Pigment der Fa. Kronos Titan (5) Pigment der Fa. Bayer AG (6) Pigment der Fa. Degussa AG (7) Pigment der Fa. BASF AG (8-10) Lagertest: Lagerung bei Raumtemperatur während 3 Monaten i.O.: in Ordnung; l.Bs.: leichter Bodensatz | | | | | | |

Es läßt sich erkennen, daß die mit den erfindungsgemäßen Dispergiermitteln hergestellten Pasten lagerstabil sind und ein hohes Pigment-Bindevermögen aufweisen.

### 4 Lackprüfung

Mit der Pigmentpaste P2 und der Pigmentpaste P5 wurden mit unterschiedlichen wäßrigen Bindemitteln in dem in Tabelle 5 angegebenen Verhältnis der Masse des Pigments (*m*_{P}) zur Masse des Bindemittels (*m*_{B}) Lacke hergestellt.

**Tabelle 5 Lacke**

| | | | | | | |
|---|---|---|---|---|---|---|
| Lack Nr. | L1 | L2 | L3 | L4 | L5 | L6 |
| Bindemittel | a | b | c | d | b | a |
| Pigmentpaste | P5 | P5 | P2 | P5 | P2 | P2 |
| ***m***_{P} / ***m***_{B} | 1 : 1 | 1 : 1 | 0,2 : 1 | 1:1 | 0,2 : 1 | 0,2 :1 |

Bindemittel a ist ein oxidativ trocknendes, acrylmodifiziertes Alkydharz in wäßriger Emulsionsform (®Resydrol AY 586 w, Cytec Surface Specialties Austria GmbH),

Bindemittel b ist ein oxidativ trocknendes, ammoniakneutralisiertes Acryl-Alkyd-Hybridsystem in wäßriger Emulsionsform (® Resydrol VAY 6278 w, Cytec Surface Specialties Austria GmbH),

Bindemittel c ist ein epoxidharzmodifiziertes, nicht trocknendes Alkydharz, das nach Neutralisation mit Amin wasserverdünnbar ist (®Resydrol AX 246 w, Cytec Surface Specialties Austria GmbH),

Bindemittel d ist eine hydroxyfunktionelle, aminneutralisierte Acrylharzemulsion für 2K-Polyurethansysteme (®Macrynal VSM 6285w, Cytec Surface Specialties Austria GmbH),

Mit diesen Lacken wurden Stahlplatten in einer Naßfilmdicke von 150 µm beschichtet.

An den Testplatten der oxidativ trocknenden Lacke wurden Glanz und Schleier mit einem Gonioreflektometer der Fa. BYK nach 48 Stunden Lagerung bei Raumtemperatur (RT, 23 °C) bestimmt, die Pendelhärte nach König (DIN 53157) nach ein- bzw. siebentägiger Lagerung bei Raumtemperatur nach Applikation. Die mechanische Beständigkeit der Beschichtungen wurde an einer Trockenschichtdicke von 30 µm bis 35 µm nach 7 Tagen Lagerung bei RT durch Tiefungsprüfung nach DIN EN ISO 1520 und durch Schlagprüfung nach ASTM D 2794 beurteilt.

Die Testplatten auf Basis der Einbrenntype (®Resydrol AX 246) wurden nach der Applikation 10 Minuten abgelüftet, 10 Minuten bei 80 °C getrocknet und dann 20 Minuten bei 130 °C eingebrannt. Eine Stunde nach dem Einbrennen wurden die Prüfungen durchgeführt.

Die Testplatten auf Basis der 2K-Polyurethantype (®Macrynal VSM 6285w) wurden nach der Applikation 10 Minuten abgelüftet und dann 30 Minuten bei 80 °C forciert getrocknet. Am nächsten Tag wurden die Prüfungen durchgeführt.

Als Vergleich wurde jeweils eine Stahlplatte benutzt, die mit einem direkt pigmentierten Vergleichslack V1 bis V5 (ohne Dispergiermittel) desselben Bindemittels beschichtet war. Die Ergebnisse der Lackprüfung sind in der Tabelle 6 zusammengefaßt.

**Tabelle 6 Lackprüfung**

| Prüflack | Glanz (20°) | Schleier | Pendelhärte in s | | mechanischer Test |
|---|---|---|---|---|---|
| | | | nach 1 d | nach 7 d | |
| L1 | 72 | 2,16 | 24 | 38 | 0 |
| V1 | 66 | 2,22 | 24 | 38 | |
| L2 | 59 | 2,16 | 34 | 34 | 0 |
| V2 | 54 | 2,12 | 30 | 34 | |
| L3* | 61 | 2,34 | 126 | nicht bestimmt | + |
| V3* | 52 | 2,38 | 139 | nicht bestimmt | |
| L4 | 82 | 2,09 | 138 | 136 | 0 |
| V4 | 81 | 2,14 | 146 | 146 | |
| L5 | 89 | 2,68 | 36 | 36 | 0 |
| V5 | 88 | 2,59 | 40 | 39 | |

| | | | | | |
|---|---|---|---|---|---|
| 0: kein Unterschied zwischen den L- und V-Proben +: L-Probe ist bis zu 10 % besser im Test als V-Probe ++: L-Probe ist über 10 % besser im Test als V-Probe -: L-Probe ist bis zu 10 % schlechter im Test als V-Probe --: L-Probe ist über 10 % schlechter im Test als V-Probe | | | | | |

### Prüfung der Korrosionsfestigkeit

Die Überprüfung der Korrosionsfestigkeit wurde durch Wasserlagerung bei 40 °C nach ISO 2812 T2, durch die Feuchtschrankbeständigkeit (Tropentest) nach DIN 53210 und durch den Salzsprühnebeltest nach DIN EN ISO 7253 in einer Korrosionsschutzgrundierung durchgeführt, basierend auf einer wäßrigen Epoxid-Acrylharz-Hybrid-Emulsion (® Resydrol VAX 6267 w, Surface Specialties Austria GmbH).

Durchführung: Zur Pigmentmischung des Mahlansatzes wurde die erforderliche Menge des Dispergiermittels zugegeben, um eine gut mahlbare Konsistenz der Paste zu erreichen. Soweit es erforderlich war wurde durch Zugabe von weiterem Wasser die Viskosität eingestellt. Die pigmenthaltige Mischung wurde 30 Minuten in einem Dissolver dispergiert, danach wurde die Grundierungszubereitung mit dem Auflackgemisch komplettiert, 10 Minuten homogenisiert und falls erforderlich mit einer weiteren Menge an Wasser auf eine Viskosität von 80 mPa·s bis 120 mPa·s eingestellt.

**Tabelle 7 Lackformulierung für den Korrosionstest**

| **Mahlansatz:** | | |
|---|---|---|
| Wasser | 10 Teile | |
| Dispergiermittel | siehe unten | |
| ®Bayferrox 130 FS | 12,6 Teile | Pigment 1) |
| ®Heucophos ZPZ | 38,1 Teile | Aktivpigment 2) |
| ®Setacarb OG | 27,7 Teile | Pigment 3) |
| ®Talkum AT extra | 17,8 Teile | Pigment 4) |
| ®Additol XW 372 | 0,75 Teile | Entschäumer 5) |

| **Auflackgemisch:** | | |
|---|---|---|
| ®Additol VXW 6388 | 0,8 Teile | PU-Verdicker 5) |
| ®Resydrol VAX 6267 | 217,5 Teile | 5) |

| | | |
|---|---|---|
| Hersteller: 1) Bayer AG, 2) Heubach, 3) Omya GmbH, 4) Norwegian Talc, 5) Surface Specialties Austria GmbH | | |

### Geprüfte Dispergiermittel:

Das erfindungsgemäße Dispergiermittel D1 (20 Teile, 35 %ig)aus Beispiel 2.1 wurde zur Prüfung herangezogen.
Zum Vergleich V1 wird direkt im Bindemittel (70 Teile, 40 %ig) angerieben, wobei die Dispergierung auf einer Perlmühle (Dauer 1 Stunde) durchgeführt wird um ein ausreichendes Dispergierergebnis zu erzielen.
Der Vergleich V2 ist ein anionisches Dispergiermittel auf Acrylatbasis (10 Teile, 35 %ig; ®Orotan 681, Fa. Rohm & Haas).
Der Vergleich V3 ist ein polyäthermodifiziertes Dispergiermittel (8,8 Teile, 40 %ig, ®Byk 190, Fa. Byk)

Für die Wasserlagerung und dem Feuchtschranktest werden 150 µm Naßfilm auf EC-Bonderblechen aufgezogen, die Trocknungszeit vor der Wasserlagerung betrug 24 Stunden, der Feuchtschranktest wurde nach einer Trocknungszeit von 1 Woche durchgeführt. Für den Salzsprühtest (DIN EN ISO 7253) wurde die Grundierung auf ein beschichtetes EC-Bonderblech appliziert und nach einer Trocknung von 1 Woche mit einem Kreuzschnitt versehen und geprüft.

### Ergebnisse:

Die Ergebnisse sind in der Tabelle 8 zusammengestellt.

**Tabelle 8 Ergebnisse des Korrosionstests**

| Probe | Wasserlagerung | Feuchtschranktest | Salzsprühtest |
|---|---|---|---|
| Beispiel B1 | ++ | ++ | + |
| Vergleich V1 | 0 | 0 | 0 |
| Vergleich V2 | - | - | 0 |
| Vergleich V3 | - | - | |

| | | | |
|---|---|---|---|
| Bewertungsschema: 0: kein Unterschied zwischen Probe und V1-Proben +: Probe ist bis zu 10 % besser im Test als V1-Probe ++: Probe ist über 10 % besser im Test als V1-Probe -: Probe ist bis zu 10 % schlechter im Test als V1-Probe --: Probe ist über 10 % schlechter im Test als V1-Probe | | | |

Aus diesen Ergebnissen ist zu erkennen, daß es möglich ist, mit den erfindungsgemäßen Dispergiermittel eine Reihe verschiedenster lösemittelarmer Pigmentpasten herzustellen und mit ausgezeichnetem Ergebnis korrosionsfeste Lacke zu pigmentieren, ohne das anwendungstechnische Eigenschaftsprofil der Lacke negativ zu beeinflussen.

## Patentansprüche

1. Verwendung von wasserverdünnbaren Kondensaüonsharzen **AB** als Dispergiermittel für Pigmente, wobei die Kondensationsharze eine Säurezahl von 20 mg/g bis 180 mg/g aufweisen und durch Kondensation von Säuregruppen enthaltenden Komponenten **A** mit einer Säurezahl von 30 mg/g bis 240 mg/g, ausgewählt aus Copolymerisaten von olefinisch ungesättigten Monomeren und durch Dimerisation oder Oligomerisation aus ungesättigten aliphatischen Carbonsäuren gewonnenen Verbindungen auf der einen Seite und Hydroxylgruppen enthaltenden Polyestern **B** mit einer Hydroxylzahl von 20 mg/g bis 300 mg/g und einer zahlenmittleren molaren Masse Mₙ von 500 g/mol bis 5000 g/mol erhältlich sind, und der Massenanteil der Komponente **A** in der Reaktionsmischung zur Synthese der Kondensationsharze **AB** 30 % bis 90 % und der der Komponente **B** 70 % bis 10 % beträgt, mit der Maßgabe, daß die Summe der Massenanteile der beiden Komponenten stets 100 % ergibt

2. Verwendung nach Anspruch 1, **dadurch gekennzeichnet, daß** als Säuregruppen enthaltende Komponente **A** ein Copolymerisat eingesetzt wird, das durch gemeinsame Polymerisation von Säuregruppen enthaltenden Monomeren **A1** und ungesättigten Monomeren **A2** ohne Säuregruppen erhältlich ist.

3. Verwendung nach Anspruch 2, **dadurch gekennzeichnet, daß** die olefinisch ungesättigten Monomeren **A1** mindestens eine Säuregruppe tragen.

4. Verwendung nach Anspruch 2, **dadurch gekennzeichnet, daß** die olefinisch ungesättigten Monomeren **A1** mindestens eine Carboxylgruppe tragen.

5. Verwendung nach Anspruch 2, **dadurch gekennzeichnet, daß** die Säuregruppen enthaltenden Monomeren **A1** ausgewählt sind aus α,β-ungesättigten Carbonsäuren mit 3 bis 13 Kohlenstoffatomen und Monoalkylestern von α,β-ungesättigten Dicarbonsäuren mit 1 bis 20 Kohlenstoffatomen im Alkylrest.

6. Verwendung nach Anspruch 2, **dadurch gekennzeichnet, daß** der Massenanteil der Monomeren **A1** in der Mischung aus den Monomeren **A1** und **A2** 10 % bis 33 % beträgt.

7. Verwendung nach Anspruch 1, **dadurch gekennzeichnet, daß** die Hydroxylgruppen enthaltenden Polyester **B** Polykondensate sind aus zweiwertigen aliphatischen Alkoholen **B1** und aliphatischen oder aromatischen Carbonsäuren **B2**.

8. Verwendung nach Anspruch 1, **dadurch gekennzeichnet, daß** die Kondensationsharze **AB** vor dem Vermischen mit Pigmenten neutralisiert und in Wasser dispergiert werden.

9. Verwendung nach Anspruch 1, **dadurch gekennzeichnet daß** die Kondensationsharze **AB** mit Pigmenten in einem Massenverhältnis von 30 g bis 300 g Pigment zu 100 g des Kondensationsharzes gemischt werden.

## Claims

1. The use of water-dilutable condensation resins **AB** as dispersants for pigments, the condensation resins having an acid number of 20 mg/g to 180 mg/g and being obtainable by condensation of components **A** containing acid groups and having an acid number of 30 mg/g to 240 mg/g, selected from copolymers of olefinically unsaturated monomers and compounds obtained by dimerization or oligomerization from unsaturated aliphatic carboxylic acids, on the one hand, and polyesters **B** containing hydroxyl groups and having a hydroxyl number of 20 mg/g to 300 mg/g and a number-average molar mass Mₙ of 500 g/mol to 5000 g/mol, and the mass fraction of component **A** in the reaction mixture for the synthesis of the condensation resins **AB** being 30 % to 90 % and that of component **B** being 70 % to 10 %, with the proviso that the sum of the mass fractions of the two components always makes 100 %.

2. The use as claimed in claim 1, wherein as component **A** containing acid groups a copolymer is used which is obtainable by joint polymerization of monomers **A1** containing acid groups and unsaturated monomers **A2** without acid groups.

3. The use as claimed in claim 2, wherein the olefinically unsaturated monomers **A1** carry at least one acid group.

4. The use as claimed in claim 2, wherein the olefinically unsaturated monomers **A1** carry at least one carboxyl group.

5. The use as claimed in claim 2, wherein the monomers **A1** containing acid groups are selected from α,β-unsaturated carboxylic acids having 3 to 13 carbon atoms and monoalkyl esters of α,β-unsaturated dicarboxylic acids having 1 to 20 carbon atoms in the alkyl radical.

6. The use as claimed in claim 2, wherein the mass fraction of the monomers **A1** in the mixture of the monomers **A1** and **A2** is 10 % to 33 %.

7. The use as claimed in claim 1, wherein the polyesters **B** containing hydroxyl groups are polycondensates of difunctional aliphatic alcohols **B1** and aliphatic or aromatic carboxylic acids **B2**.

8. The use as claimed in claim 1, wherein the condensation resins **AB**, before being mixed with pigments, are neutralized and dispersed in water.

9. The use as claimed in claim 1, wherein the condensation resins **AB** are mixed with pigments in a mass ratio of 30 g to 300 g of pigment to 100 g of the condensation resin.

## Revendications

1. Utilisation de résines de condensation **AB** diluables à l'eau, en tant que dispersant pour pigments, où lesdites résines de condensation ont un indice d'acide de 20 mg/g à 180 mg/g et sont susceptibles d'être obtenues par condensation de composants **A** contenant des groupes acides, ayant un indice d'acide de 30 mg/g à 240 mg/g, choisis parmi les copolymérisats de monomères à insaturation oléfinique et les composés obtenus par dimérisation ou oligomérisation à partir d'acides carboxyliques aliphatiques insaturés, d'une part, et de polyesters **B** contenant des groupes hydroxy, ayant un indice de groupes hydroxy de 20 mg/g à 300 mg/g et une masse moléculaire moyenne en nombre Mₙ de 500g/mole à 5 000 g/mole, et où la proportion en masse du composant **A** dans le mélange réactionnel pour la synthèse des résines de condensation **AB** va de 30 % à 90 % et celle du composant **B** va de 70 % à 10 %, avec comme condition que la somme des proportions en masse des deux composants est toujours égale à 100 %.

2. Utilisation selon la revendication 1, **caractérisée en ce qu'**on utilise en tant que composant **A** contenant des groupes acides un copolymère susceptible d'être obtenu par polymérisation conjointe de monomères **A1** contenant des groupes acides et de monomères **A2** insaturés sans groupes acides.

3. Utilisation selon la revendication 2, **caractérisée en ce que** les monomères **A1** à insaturation oléfinique portent au moins un groupe acide.

4. Utilisation selon la revendication 2, **caractérisée en ce que** les monomères **A1** à insaturation oléfinique portent au moins un groupe carboxy.

5. Utilisation selon la revendication 2, **caractérisée en ce que** les monomères **A1** contenant des groupes acides sont choisis parmi des acides carboxyliques α,β-insaturés ayant de 3 à 13 atomes de carbone et des monoesters alkyliques d'acides dicarboxyliques α,β-insaturés, ayant de 1 à 20 atomes de carbone dans le radical alkyle.

6. Utilisation selon la revendication 2, **caractérisée en ce que** la proportion en masse des monomères **A1** dans le mélange des monomères **A1** et **A2** va de 10 % à 33 %.

7. Utilisation selon la revendication 1, **caractérisée en ce que** les polyesters **B** contenant des groupes hydroxy sont des produits de polycondensation d'alcools aliphatiques divalents **B1** et d'acides carboxyliques aliphatiques ou aromatiques **B2.**

8. Utilisation selon la revendication 1, **caractérisée en ce que** les résines de condensation **AB** sont neutralisées et dispersées dans de l'eau avant le mélange avec des pigments.

9. Utilisation selon la revendication 1, **caractérisée en ce que** les résines de condensation **AB** sont mélangées avec des pigments en un rapport en masse de 30 g à 300 g de pigments pour 100 g de résine de condensation.
